# EUROPÄISCHE PATENTANMELDUNG

(11) **EP 2 088 333 A2**
(43) Veröffentlichungstag der Anmeldung: **12.08.2009**
(21) Anmeldenummer: 09001591.8
(22) Anmeldetag: 05.02.2009
(51) Int. Cl.: F16B 2/24, F16B 5/00

(54) **Sicherungsteil und Profilsicherung**

(30) Priorität: 11.02.2008 DE 102008008658
(71) Anmelder: Dorma GmbH + CO. KG, 58256 Ennepetal (DE)
(72) Erfinder: Finke, Andreas, 58285 Gevelsberg (DE); Kloßas, Jens, 45739 Oer-Erkenschwick (DE)

(57) **Zusammenfassung**

Ein erfindungsgemäßes Sicherungsteil (10) ist offenbart, das einen Anbringabschnitt (11) und einen Aufliegeabschnitt (12) jeweils in Form eines Schenkels aufweist. Der Anbringabschnitt (11) ist derart gestaltet, dass er an einem anderen Teil (20) befestigt werden kann. Der Aufliegeabschnitt (12) ist an einem Ende an dem Anbringabschnitt (11) derart angeformt, dass der Anbringabschnitt (11) und der Aufliegeabschnitt (12) einen spitzen Winkel einschließen. Der Aufliegeabschnitt (12) ist in einem vorbestimmten Maß elastisch auf den Anbringabschnitt zu und von ihm weg bewegbar ausgebildet.

## Beschreibung

Die Erfindung betrifft ein Sicherungsteil und eine damit ausgestattete Profilsicherung für Rahmenprofile beispielsweise von Schiebetüren.

Profilverbindungen an sich sind bekannt. Soll allerdings ein Profil auf ein anderes geschoben werden, ergibt sich das Problem, das aufgeschobene Profil gegen ungewolltes Herausfallen oder Lösen zu sichern.

Aufgabe der Erfindung ist es, daher ein Sicherungsteil und eine Profilsicherung zu schaffen, die einfach im Aufbau und einfach handzuhaben ist.

Diese Aufgabe wird durch den Gegenstand des Anspruchs 1 gelöst. Vorteilhafte Weiterbildungen der Erfindung sind in den Unteransprüchen angegeben.

Ein erfindungsgemäßes Sicherungsteil, weist einen Anbringabschnitt und einen Aufliegeabschnitt jeweils in Form eines Schenkels auf. Der Anbringabschnitt ist derart gestaltet, dass er an einem anderen Teil befestigt werden kann. Der Aufliegeabschnitt ist an einem Ende an dem Anbringabschnitt derart angeformt, dass der Anbringabschnitt und der Aufliegeabschnitt einen spitzen Winkel einschließen. Der Aufliegeabschnitt ist in einem vorbestimmten Maß elastisch auf den Anbringabschnitt zu und von ihm weg bewegbar ausgebildet. Das Sicherungsteil ist somit enorm einfach im Aufbau. Die im spitzen Winkel zueinander verlaufenden Schenkel ermöglichen eine Widerhakenanordnung, mittels der ein Teil gegen eine Bewegung in eine Richtung gesperrt oder gesichert werden kann.

Vorzugsweise ist bzw. sind der Aufliegeabschnitt und/oder der Anbringabschnitt elastisch verformbar ausgebildet. Alternativ oder zusätzlich kann die Ansatzstelle der beiden Schenkel elastisch verformbar ausgebildet sein. Die Elastizität ermöglicht ein Zusammendrücken der beiden Schenkel, sodass ein Profil über die Schenkel hinweg geschoben werden kann, und zwar entgegen der Sperrrichtung des Sicherungsteils.

Der Anbringabschnitt weist vorzugsweise Durchgangsöffnungen auf, die ein einfaches Mittel zum Befestigen des Sicherungsteils bieten.

Alternativ oder zusätzlich weist das Sicherungsteil ferner Vorsprünge auf, die von Seitenrändern des Anbringabschnitts hervorstehen, die parallel zu einer Längserstreckung des Anbringabschnitts verlaufen. Damit ist es möglich, das Sicherungsteil in das jeweilige Profil einzusetzen bzw. einzuschieben, wobei sich die Vorsprünge mit gegenüberliegenden Innenflächen besagten Profils verspannen bzw. verklemmen und somit das Sicherungsteil bereits arretieren. Dadurch können etwaige Bohrungen für Schrauben entfallen.

Vorzugsweise weist der Aufliegeabschnitt an einem vom Anbringabschnitt entfernten Abschnitt Ausschnitte auf, die in eine Richtung von dem Anbringabschnitt weg von dem Aufliegeabschnitt abknickend ausgebildet sind. Diese Ausschnitte bilden einen eigenen Sperrabschnitt des Sicherungsteils und können besonders ausgeführt, beispielsweise gehärtet, sein, sodass sie andere Eigenschaften haben als der Rest des Sicherungsteils.

Eine erfindungsgemäße Profilsicherung umfasst ein erstes Profil, ein zweites Profil und zumindest eines der vorbeschriebenen Sicherungsteile. Das zweite Profil ist im Montagezustand in das erste Profil eingeklipst oder auf dieses aufgeschoben. Zwischen dem ersten Profil und dem zweiten Profil ist ein Hohlraum gebildet, in dem das zumindest eine Sicherungsteil angeordnet ist. Das Sicherungsteil liegt dabei mit seinem Anbringabschnitt an dem ersten Profil an. Mit seinem Aufliegeabschnitt drückt das Sicherungsteil das zweite Profil von dem ersten Profil mit einer vorbestimmten Vorspannung weg.

Vorzugsweise umfasst die erfindungsgemäße Profilsicherung zumindest ein zweites der vorbeschriebenen Sicherungsteile. Das zusätzliche Sicherungsteil ist derart in dem Hohlraum zwischen den beiden Profilen angeordnet ist, dass es in eine zum anderen Sicherungsteil entgegengesetzte Richtung sperrt. Dies hat zur Folge, dass das zweite Profil in beide Aufschieberichtungen hinsichtlich des ersten Profils gesperrt ist und somit in keine Richtung geschoben werden kann. Dies ist insbesondere sinnvoll, wenn das zweite Profil auf das erste Profil aufgeklipst und nicht aufgeschoben ist.

Das erste Profil weist vorzugsweise eine Basis und zwei Seitenwandabschnitte auf. Die Seitenwandabschnitte gehen von der Basis ab und erstrecken sich im Wesentlichen in eine gleiche Richtung. An Enden, die der Basis abgewandt sind, weisen die Seitenwandabschnitte jeweils eine Führung vorzugsweise in Form einer Nut auf, die sich entlang einer Längserstreckung des ersten Profils erstrecken und über eine gemeinsame Länge zueinander einen nahezu konstanten Abstand aufweisen. Das zweite Profil weist einen Einsatzabschnitt, der zu den Führungen vorzugsweise komplementär ausgebildete Abschnitte aufweist. Das zweite. Profil kann mit diesen Abschnitten in die Führungen eingeschoben werden. Das zweite Profil weist ferner einen Abdeckabschnitt auf, der an Enden der Seitenwandabschnitte des ersten Profils anliegt. Damit ist eine Abdeckung für einen Innenraum des ersten Profils bei montiertem zweiten Profil gegeben.

Weitere Merkmale und Vorteile der Erfindung ergeben sich aus der nachfolgenden Beschreibung bevorzugter Ausführungsformen.

### Es zeigen:

- Figur 1: eine Verbindung in zwischen einem ersten Profil und einem zweiten Profil unter Verwendung eines Sicherungsteils gemäß einer ersten Ausführungsform der Erfindung,
- Figur 2: ein Sicherungsteil gemäß einer zweiten Ausführungsform der Erfindung,
- Figur 3: ein Sicherungsteil gemäß einer dritten Ausführungsform der Erfindung und
- Figur 4: ein Sicherungsteil gemäß einer vierten Ausführungsform der Erfindung.

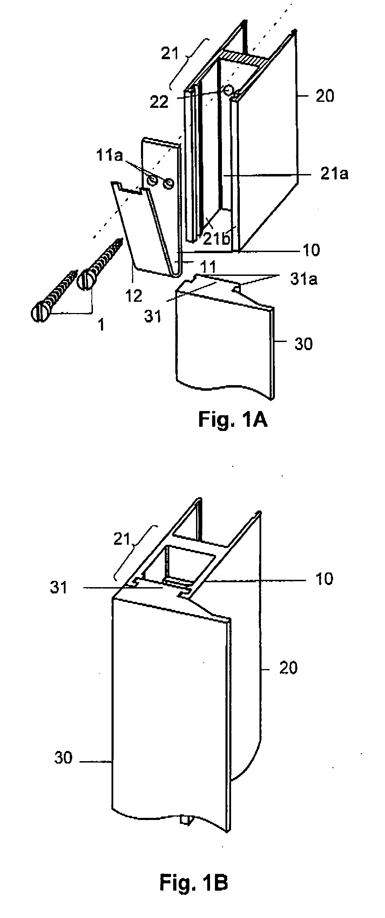

In Figur 1 ist in Explosionsansicht eine Verbindung zwischen einem ersten Profil 20 und einem zweiten Profil 30 unter Verwendung eines Sicherungsteils 10 gemäß einer ersten Ausführungsform der Erfindung dargestellt.

Das Sicherungsteil 10 hat die Form einer Klemmfeder. Es weist im Wesentlichen zwei Schenkel auf. Die Schenkel schließen einen spitzen Winkel und sind an einem Ende aneinander befestigt oder miteinander einstückig ausgebildet.

Einer der Schenkel bildet einen Anbringabschnitt 11, der dem Befestigen des Sicherungsteils im gezeigten Beispiel am ersten Profil 20 dient. Dazu weist der Anbringabschnitt 11 vorzugsweise Durchgangsöffnungen 11a, 11a auf, durch die hindurch Schrauben 1 in das erste Profil 20 oder ein dahinter angeordnetes, nicht dargestelltes anderes Teil eingeschraubt werden können. Dazu weist das erste Profil Durchgangsöffnungen 22 auf, die im Montagezustand mit den Durchgangsöffnungen 11 a fluchten. Es ist jedoch jede andere Art von Befestigung möglich. Beispielsweise kann die Befestigung mittels eines Splints erfolgen.

Der andere Schenkel bildet einen Aufliegeabschnitt 12, an dem, wie nachstehend erläutert, das zweite Profil 30 zu liegen kommt.

Das zweite Profil 30 hat im gezeigten Beispiel die Form eines Seitendichtungsprofils. Dieses wird mittels Vorsprüngen 31 a seines Befestigungsteils 31 vorzugsweise in Endabschnitte von Seitenwandabschnitten 21 b, 21 b des ersten Profils 20 geschoben. Zu dem Zweck weisen die Seitenwandabschnitte 21 b, 21 b an besagten Endabschnitten zu den Vorsprüngen 31 a im Wesentlichen komplementär ausgebildete Führungsnuten auf.

Wie in Figur 1A angedeutet, wird das Seitendichtungsprofil 30 von unten in das erste Profil 20 geschoben. Im weiteren Verlauf kommt eine dem ersten Profil 20 zugewandte Innenfläche des zweiten Profils 30 mit einer ihr zugewandten Fläche des Sicherungsteils 10 in Berührungskontakt, liegt also nach und nach auf dieser Fläche auf. Diese Fläche des Sicherungsteils 10 ist mittels des vorstehend angegebenen Aufliegeabschnitts 12 gebildet.

Da der Aufliegeabschnitt im Entspannungszustand einen größeren Abstand zu einer Basis 21 a eines Anbringabschnitts 21 des ersten Profils 20 hat als besagte Innenfläche des zweiten Profils 30, wird der Aufliegeabschnitt 12 bei fortlaufendem Aufschieben des zweiten Profils 30 auf das erste Profil 20 in Richtung erstes Profil 20 gedrückt. Aufgrund der elastischen Ausbildung des Sicherungsteils 10 wird der Aufliegeabschnitt 12 mittels der Rückstellkräfte des Sicherungsteils 10 gegen das zweite Profil 30 gedrückt.

Ist das zweite Profil 30 über das Sicherungsteil 10 hinweg geschoben, verhindern obere, dem zweiten Profil 30 zugewandte Kanten des Sicherungsteils 10 eine Rückwärtsbewegung des zweiten Profils 30 nach unten in Figur 1A. Damit ist das zweite Profil 30 gegen ein Herausfallen gesichert. Es kann allerdings weiterhin nach oben in Figur 1A bewegt werden, sodass es, wenn gewünscht, auch wieder aus dem zweiten Profil 30 heraus bewegt und entnommen werden kann.

Figur 1B zeigt die Teile von Figur 1A im Montagezustand.

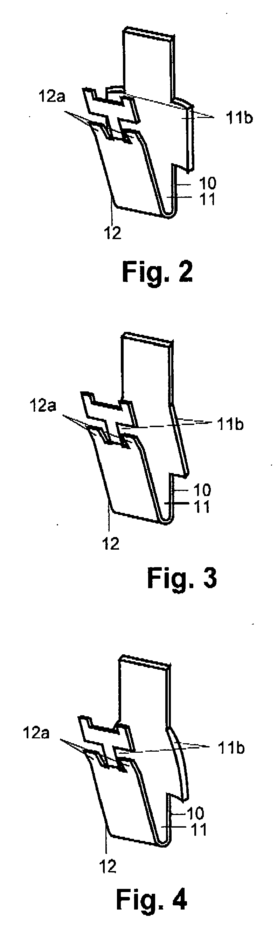

Figur 2 zeigt ein Sicherungsteil 10 gemäß einer zweiten Ausführungsform der Erfindung. Der Aufliegeabschnitt 12 weist vorzugsweise Sperrabschnitte 12a, 12a auf. Die Sperrabschnitte 12a, 12a sind im gezeigten Beispiel mittels zweier Nasen beziehungsweise Vorsprünge gebildet, die vom Schenkel 12 in eine Richtung vom Anbringabschnitt 11 weg abknickend ausgebildet sind. D. h. die Sperrabschnitte 12a, 12a übernehmen die Sicherungsfunktion. Die Sperrnasen 12a, 12a sind vorteilhafterweise aus dem Aufliegeabschnitt 12 heraus gestanzt.

Zudem weist das Sicherungsteil 10 keine Durchgangsöffnungen 11 a, 11 a auf. Stattdessen weist der Anbringabschnitt 11 zu beiden Seiten Befestigungsabschnitte 11b, 11b auf. Die Befestigungsabschnitte 11b, 11b sind seitliche Vorsprünge, die von einem jeweiligen vertikalen Seitenrand des Anbringabschnitts hervorstehen. Zudem sind sie in Richtung Aufliegeabschnitt 12 gebogen ausgeführt. Bei einem Einsetzen in ein Profil verspannen sich die Befestigungsabschnitte 11 b, 11 b mit gegenüberliegenden Innenflächen des Profils. Die Bogenform der Vorsprünge verhindert ein ungewolltes Herausbewegen des Sicherungsteils 10 aus dem jeweiligen Profil. Zudem sind die Befestigungsabschnitte 11 b, 11 b ebenfalls elastisch ausgebildet, sodass die Befestigungswirkung im Profil mittels einer Art Widerhakenanordnung erfolgt.

Figur 3 zeigt ein Sicherungsteil gemäß einer dritten Ausführungsform der Erfindung. Im Unterschied zu Figur 2 sind die Befestigungsabschnitte 11b, 11 b gerade ausgeführt und haben eine dreieckförmige Grundfläche. Bei einem Einsetzen in ein Profil verkanten die Spitzen der Befestigungsabschnitte 11 b, 11 b mit gegenüberliegenden Innenflächen des Profils. Alternativ schneiden sie sich in das Profil. Sind die Befestigungsabschnitte 11 b, 11 b zudem elastisch ausgebildet, können sie sich elastisch verbiegen, und zwar beim Einsetzen in besagtes Profil in Richtung Aufliegeabschnitt 12, was zu einer Wirkung analog zur zweiten Ausführungsform der Erfindung führt.

Figur 4 zeigt ein Sicherungsteil gemäß einer vierten Ausführungsform der Erfindung, die eine Kombination der zweiten und der dritten Ausführungsform der Erfindung darstellt. D. h. die Befestigungsabschnitte 11 b, 11 b haben eine dreieckförmige Grundfläche und erstrecken sich von ihrem Ansatz am Anbringabschnitt 11 weg bogenförmig in Richtung Aufliegeabschnitt 12.

Im Ergebnis ist durch die Erfindung ein einfach aufgebautes Sicherungsteil gegen ungewolltes Bewegen von Profilen zueinander geschaffen. Es kann sehr einfach an einem Profil eines erfindungsgemäßen Profilsystems angebracht werden, sei es mittels Schraubens oder Einsetzen oder jeder anderen bekannten Befestigungsart. Es könnte beispielsweise auch geklebt werden.

Die Erfindung ist nicht auf die vorstehend beschriebenen Ausführungsformen beschränkt.

Beispielsweise können die Durchgangsöffnungen 11 a, 11a langlochförmig ausgebildet sein, sodass das Sicherungsteil 10 in gewissen Maßen in seiner Positionierung variiert werden kann. Auch können bei den Sicherungsteilen 10 gemäß Figuren 2 bis 4 ebenfalls Durchgangsöffnungen 11 a, 11a ausgebildet sein.

Die Form der Befestigungsabschnitte 11 b, 11 b ist nicht auf die vorgenannten begrenzt, solange eine Verklemmung bzw. Verspannung mit einem jeweiligen ersten Profil stattfindet.

Auch ist die Form der vorbeschriebenen Profile 20, 30 variierbar, solange zwischen den Profilen zumindest in Teilabschnitten ein Hohlraum vorhanden ist, in den das Sicherungsteil aufgenommen ist und sicher befestigbar ist.

Die Anformstelle der Schenkel der vorbeschriebenen Sicherungsteile kann im Gegensatz zu den Schenkeln dünner ausgebildet sein, sodass eine Art Scharnier gebildet ist.

### Bezugszeichenliste

- 1: Befestigungsschraube

- 10: Sicherungsteil
- 11: Anbringabschnitt
- 11a: Durchgangsöffnung
- 11b: Befestigungsabschnitt
- 12: Aufliegeabschnitt
- 12a: Sperrabschnitt

- 20: Profil
- 21: Anbringabschnitt
- 21a: Basis
- 21b: Seitenwandabschnitt
- 22: Durchgangsöffnung

- 30: Seitendichtungsprofil
- 31: Befestigungsteil
- 31a: Anbringabschnitt

## Patentansprüche

1. Sicherungsteil (10),
• aufweisend einen Anbringabschnitt (11) in Form eines Schenkels, gestaltet, an einem Teil (20) befestigt zu werden, und
• einen Aufliegeabschnitt (12) in Form eines Schenkels, wobei
- der Aufliegeabschnitt (12) mit einem Ende an dem Anbringabschnitt (11) derart angeformt ist, dass der Anbringabschnitt (11) und der Aufliegeabschnitt (12) einen spitzen Winkel einschließen, und
- der Aufliegeabschnitt (12) in einem vorbestimmten Maß elastisch auf den Anbringabschnitt (11) zu und von ihm weg bewegbar ausgebildet ist.

2. Slcherungsteil (10) gemäß Anspruch 1, wobei zumindest der Aufliegeabschnitt (12) elastisch verformbar ausgebildet ist.

3. Slcherungsteil (10) gemäß Anspruch 1 oder 2, wobei die Ansatzstelle des Aufliegeabschnitts (12) elastisch ausgebildet ist.

4. Sicherungsteil (10) gemäß einem der vorhergehenden Ansprüche, wobei der Anbringabschnitt (11) aus einem elastischen Material gebildet ist.

5. Sicherungsteil (10) gemäß Anspruch 4, wobei der Anbringabschnitt (11) Durchgangsöffnungen (11 a, 11 a) aufweist.

6. Sicherungsteil (10) gemäß einem der vorhergehenden Ansprüche, ferner aufweisend Vorsprünge (11 b, 11 b), die von Seitenrändern des Anbringabschnitts (12) hervorstehen, die parallel zu einer Längserstreckung des Anbringabschnitts (11) verlaufen.

7. Sicherungsteil (10) gemäß einem der vorhergehenden Ansprüche, wobei der Aufliegeabschnitt (12) an einem vom Anbringabschnitt (11) entfernten Abschnitt Ausschnitte (12a) aufweist, die in eine Richtung von dem Anbringabschnitt (11) weg von dem Aufliegeabschnitt (12) abknickend ausgebildet sind.

8. Profilsicherung (1), umfassend
• ein erstes Profil (20),
• ein zweites Profil (30), wobei
- das zweite Profil (30) im Montagezustand in das erste Profil (20) eingeklipst oder auf dieses aufgeschoben ist und
- zwischen dem ersten Profil (20) und dem zweiten Profil (30) ein Hohlraum besteht, und
• zumindest ein erstes Sicherungsteil (10) gemäß einem der vorhergehenden Ansprüche, das in dem Hohlraum derart angeordnet ist, dass es
- mit dem Anbringabschnitt (11) an dem ersten Profil (20) anliegt, und
- mit dem Aufliegeabschnitt (12) das zweite Profil (30) von dem ersten Profil (20) mit einer vorbestimmten Vorspannung weg drückt.

9. Profilsicherung gemäß Anspruch 8, umfassend zumindest ein zweites Sicherungsteil (10) gemäß einem der Ansprüche 1 bis 6, das derart im Hohlraum zwischen den Profilen (10, 30) angeordnet ist, dass es in eine Richtung sperrt bzw. sichert, die einer Sperr- bzw. Sicherungsrichtung des zumindest einen erste Sicherungsteil entgegengesetzt ist.

10. Profilsicherung (1) gemäß Anspruch 8 oder 9, wobei, im Querschnitt gesehen,
• das Profil (20)
- eine Basis (1 0b) und
- zwei Seitenwandabschnitte (10a) aufweist, die
. von der Basis (10b) abgehen,
. sich im Wesentlichen in eine gleiche Richtung (-x) erstrecken und
. an der Basis (10b) abgewandten Enden jeweils eine Führung (10c) aufweisen, die sich entlang einer Längserstreckung des Profil s (10) erstrecken und über eine gemeinsame Länge zueinander einen nahezu konstanten Abstand aufweisen, und
• das zweite Profil (30)
- einen Einsatzabschnitt (31), der zu den Führungen (10c) komplementär ausgebildete Abschnitte (31 a) aufweist, sodass das zweites Profil (30) mit den Abschnitten (31 a) in die Führungen (10c) eingeschoben ist und mit ihnen in Berührungskontakt steht, und
• einen Abdeckabschnitt (31) aufweist, der an den der Basis (10b) abgewandten Enden der Seitenwandabschnitte (10a) anliegt und damit das Profil (20) abdeckt.
